# EUROPEAN PATENT APPLICATION

(11) **EP 4 671 973 A1**
(43) Date of publication of application: **31.12.2025**
(21) Application number: 24382699.7
(22) Date of filing: 28.06.2024
(51) Int. Cl.: G06F 9/30

(54) **UNIVERSAL VECTOR ACCELERATION SYSTEM FOR SEQUENCE ANALYSIS ALGORITHMS**

(71) Applicant: Barcelona Supercomputing Center-Centro Nacional de Supercomputación, 08034 Barcelona (ES)
(72) Inventor: PAVON RIERA, Julian, 08029 Barcelona (ES); VARGAS VALDIVIESO, Ivan, 08940 Cornellà de Llobregat (ES); ROJAS MORALES, Carlos, 08014 Barcelona (ES); MARCO SOLA, Santiago, 08028 Barcelona (ES); UNSAL, Osman, 08019 Barcelona (ES); CRISTAL KESTELMAN, Adrian, 08272 Sant Fruitós de Bages (ES)
(74) Representative: TRBL Intellectual Property

(57) **Abstract**

The present invention relates to a system (1) for accelerating the execution of an algorithm, adapted to connect to the vector datapath of a Vector Processing Unit (VPU) (2) comprising a Vector Register File (VRF) (3) and an arithmetic logic unit (ALU) (4). The system (1) comprises a data encoder (6) connected to the VRF (3), one or more direct-mapped buffers (5) connected to the VRF (3) and to the data encoder (6). The data encoder (6) receives data from the VRF (3), applies a static-bit encoding and sends the encoded data to the one or more buffers (5); the access control module (7) transfers data from the VRF (3) to the one or more buffers (5) and/or instructions from the buffers (5) to the ALU (4); and the one or more buffers (5) receive data from the VRF (3) and/or from the data encoder (6), store it in a position within the buffer (5) and deliver it to the access control module (7).

## Description

### FIELD OF THE INVENTION

The present invention belongs to the technical field of computational algorithm accelerators. More specifically, the invention refers to a system based on a hardware-software co-design adapted to be connected to a Vector Processing Unit (VPU), and further adapted to accelerate memory access operations to input data and misaligned data operations, thereby providing a flexible framework applicable to multiple algorithms, and achieving a light-weight hardware implementation that reuses the available hardware in VPUs. It has been designed for its application in the acceleration of genetic/genomic sequencing algorithms, although it is also advantageous in various other fields of application.

### BACKGROUND OF THE INVENTION

Genome sequence analysis, where genome sequences are compared to each other to infer important genetic information, is one of the fundamental computational steps in a great variety of applications ranging from personalized medicine to evolutionary genetics. In this field, a plethora of different algorithms have been developed over the past decades aimed at establishing the correspondence between two or more sequences of (genomic) data.

The two main categories of sequence analysis algorithms are based on sequence alignment or in edit distance approximation. The sequence alignment problem is formulated as Approximate String Matching (ASM) which is often solved using Dynamic Programming (DP) algorithms, such as Smith-Waterman-Gotoh (SWG) and Needleman-Wunsch (NW). DP-based algorithms are computationally expensive with quadratic time and space complexities in sequence length. Edit distance approximation algorithms, such as SneakySnake, determine the edit distance (i.e., number of edits needed to convert one sequence into the other) that is always less than or equal to a user-defined threshold.

Analysing the increasing volume of sequencing data poses significant computational challenges, motivating a large body of research focused on optimizing genome sequence analysis applications. These include software and hardware optimizations for both sequence alignment and edit distance approximation. Recently, a family of novel algorithms, such as the Wavefront Alignment (WFA) and its bidirectional version, BiWFA, have been proposed to reduce the complexity of DP algorithms while ensuring an optimal solution thereto. These algorithms exhibit notable levels of Data Level Parallelism (DLP), as large amounts of data undergo identical operations. The use of vector architectures in modern CPUs, characterized by Single Instruction Multiple Data (SIMD) execution, is a well-known technique for harnessing the available DLP in applications. Vector architectures offer a versatile framework, making them adaptable to diverse ASM algorithms. However, these algorithms pose new challenges to their efficient execution on vector architectures. Specifically, these algorithms employ memory-indexed instructions, e.g., scatter-gather, which are both costly and entail considerable latency for retrieving and storing intermediate data.

Moreover, current hardware approaches are subject to three primary limitations. First, some proposals prescribe a limiting hardware architecture tailored to a singular sequencing algorithm, thereby encountering challenges associated with their versatility. In fact, emerging tools are incorporating multiple algorithms for the read alignment stage in the genome sequencing pipeline, thus requiring hardware capable of switching and/or combining multiple algorithms at run. Second, some other proposals target only one genome data type (i.e., DNA/RNA) and therefore lack generality. Third, other proposals exhibit the constraint of exclusively processing short input sequences, i.e., of the order of hundreds or a few thousand base pairs (bp). Given the ongoing emergence of novel algorithms, such as the mentioned WFA and BiWFA, alongside the introduction of new sequencing data types, exemplified by HiFi from PacBio and Duplex from ONT, characterized by longer and more accurate sequences, there exists a heightened imperative for software development and hardware architecture to devise adaptable and scalable systems. These systems should facilitate the flexible integration of new sequence analysis algorithms without necessitating the reconstruction of the accelerator.

In view of the above, there is a need for a sequence analysis accelerator that not only ensures elevated efficiency, but is also programmable to accommodate a broad spectrum of emerging genomics algorithms, leveraging their DLP compatibility and being suitable for both short and long sequence analyses.

### BRIEF DESCRIPTION OF THE INVENTION

The present invention aims to overcome the above-mentioned limitations of the state-of-the-art by providing a novel system for accelerating the performance of genomics (and other sequence) analysis algorithms. The proposed design is versatile, in the sense that is suitable for accelerating memory indexed instructions in different modern algorithms, and supports both short and long sequence analysis. The system combines a vector accelerator architecture coupled with a general-purpose CPU's pipeline and incorporates improved vector instructions. It is designed to accelerate memory access operations to input sequences and misaligned data operations, thereby providing a flexible framework applicable to multiple algorithms, and achieving a light-weight hardware implementation that reuses the available hardware in VPUs.

More specifically, a first object of the invention relates to a system for accelerating the execution of an algorithm, the system being adapted to connect to the vector datapath of a central processing unit (CPU), wherein the CPU comprises a Vector Processing Unit (VPU) comprising, in turn, a Vector Register File (VRF) configured to manage a flow of data, and an arithmetic logic unit (ALU), configured to perform arithmetic and logic operations on data. The system of the invention comprises the following elements:
- a data encoder connected to the VRF;
- one or more direct-mapped buffers connected to the VRF and to the data encoder, the one or more buffers comprising at least one write port and a plurality of read ports and being adapted to support bit-encoded, unaligned values; and
- an access control module connected to the one or more buffers, to the VRF and to the ALU;
and each of these elements is adapted as follows:
- the data encoder is adapted to receive data from the VRF, apply a static-bit encoding to the received data obtaining encoded data, and send the encoded data to the one or more buffers;
- the access control module is adapted to transfer data from the VRF to the one or more buffers and to transfer data and/or instructions from the buffers to the ALU; and
- the one or more buffers are adapted to receive data from the VRF and/or from the data encoder, store it in a position within the buffer and deliver it to the access control module whenever a read operation is executed by said access control module upon the buffer specifying the corresponding position.

These elements, which include a specific set of Instruction Set Architecture (ISA) extensions (described in detailed bellow) allow for efficient and optimized memory accesses performed during the algorithms' runtime. In particular, modern algorithms use scatter-gather memory instructions to traverse the input sequences. These instructions split a memory request into multiple requests. Although these requests can be pipelined, they take more cycles to process compared to unit-stride instructions. This increases the overall latency of scatter-gather instructions. For example, in Intel and Fujitsu A64FX processors, scatter-gather instructions latency is at least 22 and 19 cycles, respectively, even when all the requested data is already in the L1D cache.

In the system of the present invention, the hardware buffer/s are specifically designed to deliver sufficient bandwidth to the VPU for rapid execution of indexed memory instructions. This/these buffer/s store/s frequently used genome sequencing data, particularly those that are accessed through indexed memory instructions. Then, the algorithm utilizes the new ISA extension to access the values previously stored in the buffer/s. Thus, the system does not eliminate scatter-gather support from the cache hierarchy: it works cooperatively with it. It efficiently facilitates the execution of memory indexed operations on a fixed number of hot values within the active working set, while the cache hierarchy is utilized for unit-stride operations or/and to scatter-gather less frequently accessed values from larger data structures.

In a preferred embodiment of the invention, the static-bit encoding applied by the data encoder to the received data is the smallest possible bit-encoding of said received data without loss of information. This is determined unambiguously after analysing the received data. For example, if the algorithm to be accelerated relates to the comparison of two genomic sequences, those can be DNA/RNA sequences or proteins (amino acid sequences), among others. DNA/RNA sequences comprise only 4 possible characters, corresponding to each of the nucleobases (A, T, C and G for DNA and A, U, C and G for RNA), and, therefore, can be encoded with only 2 bits (2²=4) without loss of information. On the other hand, the number of amino acids that may be comprised within a protein amounts to 20. Therefore, in order to properly encode an amino acid sequence (a protein) without loss of information, at least a 5-bit encoding is necessary (2⁵=32) since a 4-bit encoding will only allow for representing a 2⁴=16 characters. Thus, the 5-bit encoding is, therefore, the smallest possible one in this case. The determination of the number of characters (and therefore or the smallest possible bit-encoding for the received data) may be carried out automatically by the CPU/VPU and sent as an instruction to the data encoder. It may also be performed directly within the data encoder prior to the application of said bit-encoding.

In another preferred embodiment of the invention, the access control module is adapted to configure the number of elements stored in each buffer and the bit-size of each element stored in each buffer. This allows for a tailored storage of the information within the buffers and an easier management of said information when required by the algorithm.

In another preferred embodiment of the invention, the access control module is further configured to send one or more instructions to the ALU to:
- perform one or more arithmetic and/or logic operations upon two data values received from the one or more buffers; and/or
- perform one or more arithmetic and/or logic operations upon a data value received from one or more buffers and a data value received from the VRF.

In both cases, the result of said operation is sent to the VRF for an eventual future use. This allows for optimizing the operations performed in the ALU, depending on the location of the data that is needed to perform the corresponding operation.

In another preferred embodiment of the invention, the system further comprises a count ALU module connected to the VRF and to the access control module, the count ALU module being adapted to:
- receive two input sequences of data from the VRF and/or from the one or more buffers;
- determine the number of consecutive matching elements between the two input sequences of data; and
- send the number of determined consecutive matching elements to the VRF.

This allows for reducing the instruction overhead when calculating consecutive matches, a key aspect in modern algorithms related to genomic sequence analysis, among others.

In another preferred embodiment of the invention, the number of read ports comprised by the one or more buffers is 2, 4 or 8. When the number of requests to a buffer surpasses the number of read ports, some requests are stalled, and the buffer processes them in a round-robin manner. The total latency to process all the read requests requires 8/(num_of_ports) cycles. Therefore, implementing 2, 4 or 8 read ports within the buffers ensure a minimum number of 4, 2 or 1 cycle to process all the read requests, respectively, being those numbers much lower than those in conventional VPUs. This corresponds to an implementation with respect to a 512-bit vector architecture, although when using a different system, these numbers may vary. For example, for a 256-bit architecture, the maximum number of ports would be 4 and for a 1024-bit architecture the maximum number would be 16 ports.

In another preferred embodiment of the invention, the one or more buffers further comprise:
- a plurality of memory banks comprising a word bit-length equal to the bit-width of the VPU lanes comprised by the CPU and adapted to store data within a column structure;
- one or more write logic modules connected to the memory banks, to the data encoder and to the VRF adapted to receive input data and an input position and to split the input data into segments and store each segment into consecutive memory bank columns according to the input position; and
- one or more read logic modules connected to the memory banks and to the access control module adapted to fetch data stored in consecutive memory bank columns, to concatenate the fetched data into a single output and to send the output to the access control module.

This configuration is advantageous for appropriately managing the writing and reading operations to and from the buffers during the algorithm's execution. It allows for leveraging the full storage capability of the buffers in a fast and efficient way.

In another preferred embodiment of the invention, each read port comprises a number N of memory banks connected to a single read logic module, and where N is equal to the following ratio: maximum vector length supported by the CPU/word bit-length of the memory banks.

A second object of the invention refers to a computer implemented method for accelerating the execution of an algorithm, the method comprising the operation of a system according to any of the described embodiments connected to the vector datapath of a CPU and performing the following steps:
a) receiving input data in the VRF;
b) sending the input data to the data encoder and applying a static-bit encoding to said input data, obtaining encoded data;
c) sending the encoded data and a position index to the one or more buffers and storing said encoded data in the one or more buffers according to the position index;
d) executing the algorithm by:
   d1) sending input data from the VRF to the ALU;
   d2) sending encoded data from the one or more buffers to the ALU through the access control module;
   d3) performing arithmetic and/or logic operations upon the input data and/or the encoded data obtaining a first output;
   d4) sending the first output to the VRF and/or to the one or more buffers;
   d5) repeating steps d1)-d4) until the execution of the algorithm is completed and a final output is obtained; and
   d6) sending the final output of the execution of the algorithm to the VRF.

By using this method, an algorithm can be efficiently accelerated, since the data storage and the data loading in and from the buffers saves considerable amounts of time. For instance, in modern genetic sequencing algorithms, conventional VPUs use scatter-gather memory instructions to traverse the input sequences, increasing the overall latency of the process. Within the present invention, however, the input sequences (and other data) are first stored in the buffers and then accessed in a fast and efficient manner when needed to carry out the algorithm computations.

Finally, a third object of the invention refers to the use of a method according to the preceding claim for at least one of the following:
- accelerating a data sequence alignment algorithm;
- accelerating a genetic or genomic sequence alignment algorithm; and
- accelerating a histogram computation algorithm.

All these applications share a common limitation when implemented in conventional CPUs: memory-indexed instructions represent a bottleneck for the different operations involved in all of these algorithms. Therefore, the present invention is especially suitable in these cases, since it allows for accelerating their overall performance by optimizing the memory management of the data involved. It is to be noted, nonetheless, that the application of the disclosed method is not limited to these three applications, since it can serve to accelerate any kind of algorithm in which memory-indexed instructions are involved.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice. Furthermore, any described feature can be used in different embodiments of the invention, in isolation or in combination.

### DESCRIPTION OF THE DRAWINGS

The foregoing and other features and advantages will be more fully understood from the detailed description of the invention, as well as from examples referring to the attached figures, which are described in the following paragraphs, wherein:
Figure 1 shows a schematic representation of a system according to an embodiment of present invention. In said Figure, the different elements comprised by the system can be seen, as well as their connection to the elements belonging to a CPU/VPU.
Figure 2 shows a schematic representation of the count ALU module and the qzcount functionality according to an embodiment of the invention.
Figure 3 shows a schematic representation of the buffer components and their configuration according to an embodiment of the invention.
Figure 4 shows a schematic representation of the read logic module functionality according to an embodiment of the invention.
Figure 5 shows the execution flow for a classic DP-based algorithm using a regular vector implementation (upper, and middle-upper panels) and the system's implementation (middle-lower and lower panels).
Figure 6 shows the results of the comparison between the performance of a system according to an embodiment of the invention and the performance of a single-core standard accelerator. Results are shown for different algorithms as well as for short and long input sequences.
Figure 7 shows the number of cache memory requests of a system according to an embodiment of the invention normalized to that of a standard implementation.
Figure 8 shows the results of the comparison between the performance in accelerating different steps of a sequence analysis pipeline of a system according to an embodiment of the invention and the performance of a multicore standard accelerator. Results are shown for short and long input sequences and normalized to a standard implementation of the WFA algorithm.

### Numerical references used in the drawings

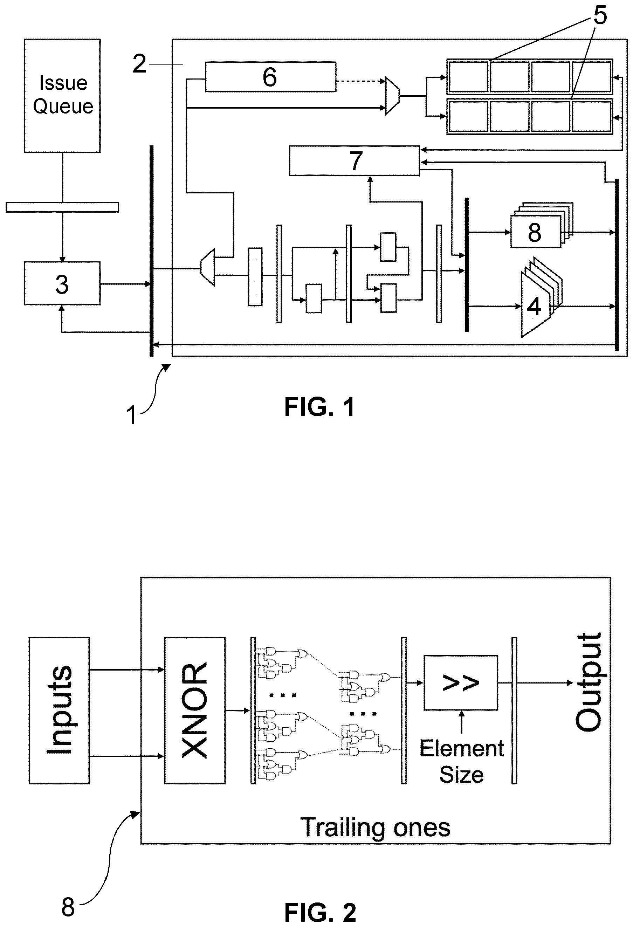

In order to provide a better understanding of the technical features of the invention, the referred Figures 1-8 are accompanied of a series of numerical references which, with an illustrative and non-limiting character, are hereby represented:

| | |
|---|---|
| 1 | System |
| 2 | Vector Processing Unit (VPU) |
| 3 | Vector Register File (VRF) |
| 4 | Arithmetic Logic Unit (ALU) |
| 5 | Buffer |
| 6 | Data encoder |
| 7 | Access control module |
| 8 | Count ALU module |
| 9 | Memory bank |
| 10 | Write logic module |
| 11 | Read logic module |
| 12 | Access logic module |
| 13 | Slicing logic module |

### DETAILED DESCRIPTION OF THE INVENTION

The detailed description of the present invention to be described below refers to the accompanying drawings, which illustrate specific embodiments in which the present invention may be implemented. These embodiments will be described in detail sufficient to enable those skilled in the art to implement the present invention. It should be understood that various embodiments of the present invention are different from each other but need not be mutually exclusive. Accordingly, the detailed description to be described below is not intended to be taken in a limiting meaning, and the scope of the present invention, if properly described, is limited only by the appended claims, in addition to all scopes equivalent to those claimed by the appended claims. In the drawings, reference numerals refer to the same or similar functions over several aspects.

Hereinafter, preferred embodiments of the present invention will be described in more detail with reference to the accompanying drawings.

The present invention aims to overcome the above-mentioned limitations of the state-of-the-art by providing a novel system (1) for accelerating the performance of algorithms that comprise scatter-gather (also dubbed indexed memory) operations. Among these algorithms, genomics and other sequence analysis algorithms serve as an illustrative example. For this reason, in the following, the proposed system (1) will be described in the context of the acceleration of one of these algorithms, although other uses and applications are possible and equivalent. The proposed design is versatile, being suitable for accelerating memory indexed instructions in different modern algorithms and supports both short and long sequence analysis. The system (1) combines a vector accelerator architecture coupled with a general-purpose CPU's pipeline, and incorporates improved vector instructions compared to the prior-art alternatives.

### System microarchitecture

The system (1) of the present invention is based on a microarchitecture comprising three main components that are adapted to be connected to the datapath of a VPU (2), and more specifically, to the VRF (3) and to the ALU (4) of said VPU (2). These three elements are shown in Figure 1 and correspond to:
- one or more hardware buffers (5) that are directly connected to the VRF (2) to quickly forward data to the vector ALU (4) without using the cache hierarchy;
- a data encoder (6) connected to the VRF (3) and to the buffers (5) that applies a static bit-encoding to reduce the size of the input data (sequences) to be stored in the buffers (5), when possible; and
- an access control module (7) connected to the buffers (5), to the VRF (3) and to the ALU (4) that processes all the data accesses from the VPU (2) to the buffers (5) and works as the interface between the buffers (5) and the core's VPU (2) components.

In the embodiment shown in Figure 1, the system (1) comprises two buffers (5) as well as an additional count ALU (8) module that counts the number of consecutive matching elements between two input data (sequences) values.

The buffers (5) feature three key characteristics that allow for providing more efficient support for memory indexed operations. Firstly, they are direct mapped. Therefore, instead of using memory addresses, indices are used to access the buffers (5), thus requiring a simpler control compared to caches. Secondly, the buffers (5) are highly multiported structures (specifically, they are single write- and multiple read-port structures), allowing the ALU (4) to access data in just two cycles, a significant improvement over the 22 or 19 cycles required in Intel and A64FX cores, respectively. Finally, the buffers (5) support bit-encoded values, reducing the overhead of accessing unaligned data.

This last presented feature of the buffers (5) is directly related to the data encoder (6) comprised in the system (1) of the invention. The data encoder (6) is adapted to apply an 8-, 7-, 6-, 5-, 4-, 3-, or 2-bit encoding to represent each of the characters comprised by the input data. For example, if the input data corresponds to two input sequences that correspond to RNA or DNA sequences, then they are encoded using a 2-bit unique binary representation since both RNA and DNA alphabets have 4 characters. If the two sequences are proteins, then each base can be encoded into a 5-bit unique binary representation as the protein alphabet has 20 characters. The extracted bits are packed together in a single vector and then forwarded to the buffers (5).

The interface between the microarchitectural components of the VPU (2) and the buffers (5) corresponds to the access control module (7). It executes the read/write operations to the buffers (5) and forwards the read data to the VPU's ALU (4). It is to be noted that the access control module (7) can only fetch eight concurrent read requests to each buffer (5) corresponding to eight 64-bit elements for a typical 512-bit vector length. Therefore, the number of cycles required to process all the requests is directly related to the number of read ports in the buffers (5). When the number of requests to a buffer (5) surpasses the number of read ports, some requests are stalled and the buffer process them in a round robin manner. The total latency to process all the read requests thus requires 8/(num_of_ports) cycles. This corresponds to an implementation with respect to a 512-bit vector architecture, although when using a different system, the number of concurrent read requests to each buffer may vary. For example, for a 256-bit architecture, the system would perform 4 concurrent read requests, for a 1024-bit architecture the system would perform 16 concurrent read requests, and so on.

### System Vector Instructions

In order to maximize the acceleration capabilities of the system (1) of the invention, not only hardware, but also software in the form of novel vector instructions is provided. To this purpose, the system is configured to perform the following instructions:
- qzencodeMask (int8 mask): Stores the mask used to encode the input data in an encoding table comprised by the data encoder (6).
- qzencode (int SEL, vreg VAL, reg Idx): Encodes the input sequences in the input vector VAL and stores the encoded values in the buffers (5). The encoding is applied as specified by the mask previously stored using the qzencodeMask instruction. SEL and Idx specify the buffer (5) and position within the buffer (5) where the encoded data will be stored, respectively.
- qzstore (vreg VAL, vreg IDX, int SEL): Stores data from the VRF (3) to the buffers (5). SEL works the same way as in qzencode. Each value in IDX is an index to store its corresponding element from VAL in the buffer (5).
- qzload (vreg IDX, int SEL): Stores data from the buffers (5) to the VRF (3). SEL specifies the read buffer (5). Each value in IDX is and index to read from the buffer (5).
- qzconf (reg Eb0, reg Eb1, reg Esize): Configures the size of the data stored in the buffers (5). Registers Eb0 and Eb1 indicate the number of elements stored in each buffer (5). Esize indicates the element (e.g., 8-bit, 4-bit and 2-bit elements).
- qzmhm <OPN> (vreg IDX0, vreg IDX1): Operates over data stored in the buffers (5). Each element in IDX0 and IDX1 is used to read a different position in the buffers (5). Then, the system (1) computes the operation specified by the opcode OPN to the read values (e.g., addition, comparison, etc.). The result of this instruction is written back to the VRF (3).
- qzmm <OPN> (vreg VAL, vreg IDX, int SEL): Works like qzmhm but processing both data from the buffers (5) and the VRF (3) (VAL). Each element in IDX is used to read a different position in the buffer (5) specified by SEL and process it together with the corresponding element in VAL.
- qzcount (vreg VAL0, vreg VAL1): Splits input vectors (VAL0 and VAL1) into 64-bit segments; each segment from VAL0 is processed together with its corresponding segment from VAL1. Then, the instruction counts the consecutive matching elements in each 64-bit segment and forwards the output to the VRF (3). This instruction can be executed standalone or with the qzmhm instruction to access the buffers (5) and count consecutive matches in values previously stored.

The qzcount instruction represents the software counterpart of the count ALU module (8), allowing for reducing the instruction overhead of modern algorithms when calculating consecutive matches. The count ALU module (8) processes two 64-bit elements so the system (1) includes as many instances of this module as 64-bit lanes are comprised in the VPU (2). When executing the qzcount instruction, the count ALU module (8) receives two input values and their element size (e.g., 2-bit). First, it applies a bitwise XNOR operation to detect matching bits. Then, it implements the logic to count the number of trailing ones from the previous operation. The result of this operation determines the number of consecutive matching bits. In the next stage, the number of leading ones is right-shifted depending on the element size value, to get the number of matching elements. For example, for 2-, 8- and 64-bit elements the number of leading ones is shifted by one, three and six, respectively. This is shown schematically in Figure 2.

### Buffer features

The buffers (5) of the system (1) comprise, beyond the already mentioned features, three main hardware elements:
- a plurality of memory banks (9) comprising a word bit-length equal to the bit-width of the VPU lanes and adapted to store data within a column structure;
- one or more write logic modules (10) connected to the memory banks (9), to the data encoder (6) and to the VRF (3) adapted to receive input data and an input position and to split the input data into segments and store each segment into consecutive memory bank columns according to the input position; and
- one or more read logic modules (11) connected to the memory bank (9) and to the access control module (7) adapted to fetch data stored in consecutive memory bank columns, to concatenate the fetched data into a single output and to send the output to the access control module (7).

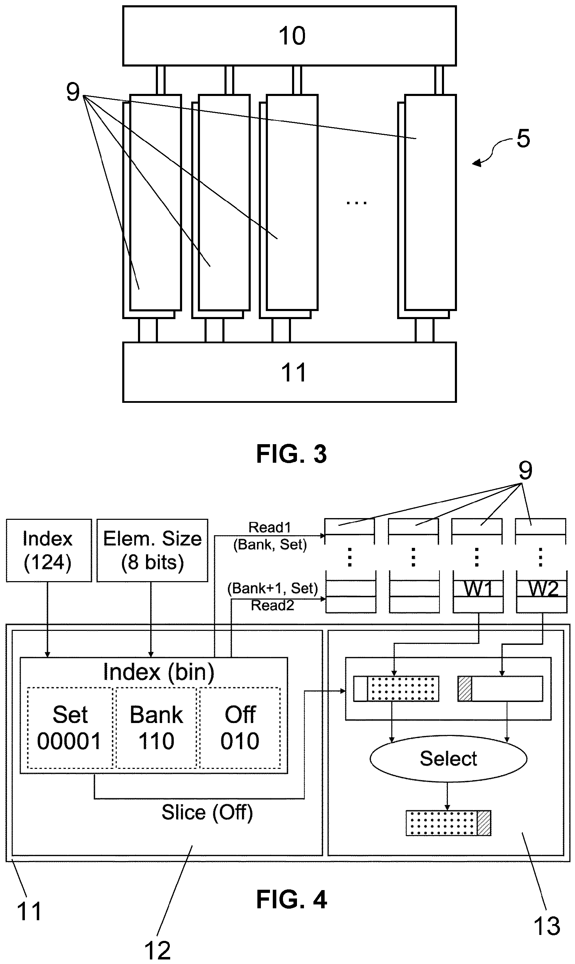

A general configuration of these elements according to an embodiment of the invention is shown in Figure 3.

The memory banks (9), which might be, for instance and not in a limiting way, Static Random Access Memory (SRAM) blocks, store the values used by the VPU (2). Each memory bank has a 64-bit word length that matches the VPU lanes bit-width. To provide enough bandwidth to the qzencode and qzstore instructions when storing consecutive elements, the buffers (5) are implemented using a multibanking approach, placing one bank per VPU lane (thus, eight banks for a 512b vector). The indices to map the memory banks (9) are interleaved. To reduce the latency of multiple concurrent read access to the buffers (5), they are designed as multi-ported structures, as mentioned. To reduce the area overhead of multi-ported buffers (5), data replication is implemented. A read port consists of eight memory banks (9) connected to a single read logic module (11). Then, when adding a new read port, a new set of memory banks (9) and read logic instances are placed in the buffers (5). To store data in one of the buffers (5), the write logic module (10) determines the memory bank column to store the data and replicates the values in all its instances.

The write logic module (10) stores data into the buffers (5) in two modes: encoded-mode and direct-mode. In encoded-mode, it receives a 128-bit vector from the data encoder (6) and an index. It splits the input vector into two 64-bit segments and stores them in two consecutive memory bank columns in the position specified by the index. This is executed in a single cycle. In direct-mode, the write logic module (10) receives two input vectors from the VRF (3): a vector of indices IDX and a vector of values VAL. First, it splits IDX and VAL into 64-bit segments. Then, for every pair of segments, it uses the element of IDX to select the column and position in the memory banks (9) to store the corresponding element from VAL. The writing latency depends on the number of concurrent accesses to the same memory bank column. For example, if all the requests go to the same bank, the write latency will be eight cycles.

The read logic module (11) is used to access the data stored in the memory banks (9) and it comprises an access logic module (12) and a slicing logic module (13). Since the system (1) supports different element sizes, data access to the buffers (5) might be unaligned with respect to the memory bank's (9) word. Then, to enable unaligned read operations, one word is read from two consecutive memory banks (9) and a single output is created. Figure 4 depicts the functionality of the read logic module (11). The read logic module (11) receives two inputs, an index and the element size. The index and size are used by the access logic module (12) to read the memory banks (9) and generate the appropriate output respectively. First, the access logic module (12) splits the input index into set, bank and offset values based on the element size. Then, the slicing logic module (13) reads the content from two consecutive memory banks (9) using the bank and set values (W1 and W2), and the offset value is used to slice the value of W1 and W2. Finally, the slicing logic module (13) selects the order to pack the sliced values and generates a single 64-bit output. Regarding 64-bit element access, the access logic module (12) and the slicing logic module (13) only select the corresponding value from the memory banks (9).

Beyond these elements, the buffers (5) comprise two key parameters: their size in terms of storage capacity and the number of read ports. These parameters directly affect the performance, area, and power footprint of the system (1). For establishing an optimal size of the buffers (5), the applicability of the system (1) on short and long sequencing technologies is taken into account, considering the Illumina sequencing technology (100 bp) as a benchmark for short sequences and the HiFi PacBio technology (10Kbp - 30 Kbp) for long sequences. Based on these sequencing technologies, the buffers (5) storage capacity is sized to 16KB in total. Thus, taking into account the functionality of the data encoder (6) in reducing the number of bits needed to encode the sequences, each buffer (5) could store up to 32.7Kbp sequences that cover both technology use cases (Illumina and HiFi PacBio).

Despite this advantageous design, some of the modern sequencing frameworks, such as Oxford Nanopore, support sequences that are extremely long, even up to 2M base pairs. This may be included in the system (1) of the invention by employing read mappers such as minimap2 which can generate shorter subsequences from larger sequences for an exact match of subsequence length to the buffers' (5) size, thus mitigating overheads that might stem from performing sequence alignment on the complete, extremely long sequence. Additionally, windowed and tiling software approaches, that divide the DP matrix and input sequence into tiles and shorter subsequences respectively, could be utilized for independent processing as well.

Regarding the read ports, different configurations of the system (1) have been evaluated in order to determine their optimal number in terms of performance, area and power consumption. These configurations are summarized in Table 1 below, together with the corresponding are and power consumption when physically implemented using Synopsys' ICC2 Place and Route tool. The fourth and fifth columns show the percentage of area overhead that each configuration of the system (1) adds to a Fujitsu A64FX core and System on Chip (SoC) respectively, considering a system's (1) instance integrated into each core of the SoC.

**Table 1. Area, power, and performance efficiency comparison between different configurations of the system (1) in the number of read ports.**

| Number of read ports | Area (mm²) | Leakage Power (uW) | A64FX Core (%) | A64FX SoC (%) |
|---|---|---|---|---|
| 1 | 0.013 | 98 | +0.46 | +0.21 |
| 2 | 0.026 | 189 | +0.88 | +0.37 |
| 4 | 0.048 | 370 | +1.75 | +0.69 |
| 8 | 0.097 | 746 | +3.37 | +1.41 |

Increasing the number of ports directly impacts positively the performance over modern algorithms because the latency required to read data in the buffers (5) is reduced. However, since data replication is used to implement a read port in the buffers (5), the area and power significantly increase when a new read port is added. Nevertheless, each bank using single-port memory banks is implemented to reduce their impact in the area of the system (1). Because of this, even the larger configuration with 8 read ports features a negligible area overhead of 1.41% compared to the Fujitsu A64FX SoC, while providing significant performance results.

It is to be noted that the number of read ports in the buffers (5) is neither univocally determined, nor limited to the representative values above. It is a design choice that depends on the specific application for which the system (1) is to be used, considering the corresponding effects on performance, area and power consumption.

### Integration with Out-of-Order (OoO) processors:

In the invention's design, the buffers (5) work as direct-mapped structures, and the vector ALU (8) directly stores and loads data to/from them. Then, when requiring to constantly read and update values into the buffers (5), there is a risk of overwriting useful data or reading erroneous values in these structures when executing speculatively. To mitigate this risk, the qzstore and qzload instructions are executed at commit as non-speculative operations. Thus, these instructions wait in the issue queues until they become non-rollback instructions, when a ready to execute signal is sent to the issue logic of the VPU (2). Other instructions are used by algorithms only to access data previously stored in the buffers (5) and are executed speculatively.

On the other hand, when an exception occurs (e.g., a translation lookaside buffer refill exception), the processor will jump to an Operating System (OS) subroutine that specifically manages the exception. As the qzstore instruction executes at commit, there is no risk to affect the values in buffers (5) and the state of the system is preserved when the processor resumes the execution after solving the exception.

Finally, the buffers (5) correspond to architectural state, and must be saved across context switches. As is done for vector ALU (8) and floating-point unit (FPU) state, the OS does not need to save and restore their state on every system call or interrupt, only when the process is descheduled. However, as these context switches occur infrequently, saving buffer's (5) state represents a negligible fraction of the time spent in OS code.

### Use cases

The WFA (a) and SS (b) algorithms can be efficiently accelerated by using the system of the invention. The corresponding pseudocode is shown for illustrative purposes.

### WFA implementation:

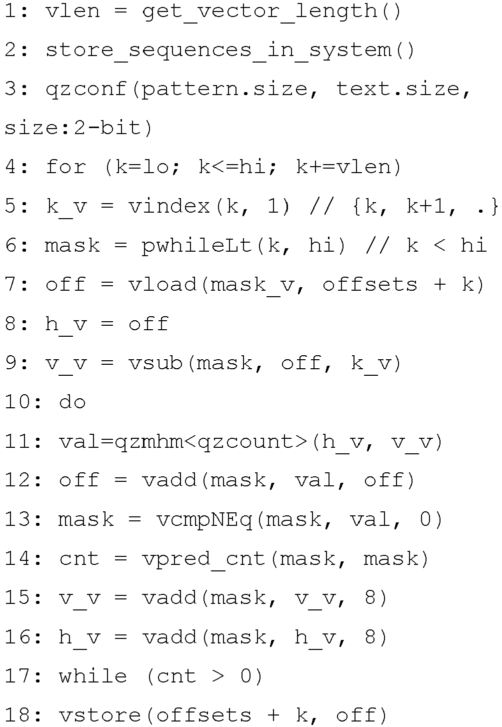

### SS implementation:

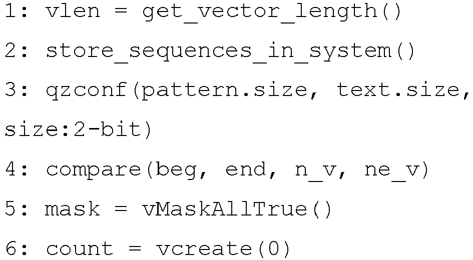

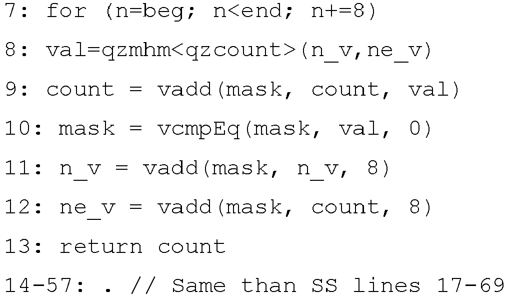

For both algorithms, the input sequences are first stored in the buffers (5) (line 2) and the qzconf instruction is used to configure the number of elements and element size (line 3). When using the system (1) of the invention, both algorithms execute using the qzmhm and qzcount instructions-lines 11 and 8 respectively. First, the qzmhm instruction reads the input sequences stored in the buffers (5). Then, the qzcount functionality counts the number of consecutive matching elements from the read values. By using both instructions, memory indexed instructions are accelerated directly in the system (1) of the invention and the number of instructions in the inner loop of WFA and "compare" function in SS are significantly reduced. This allows for significantly outperforming standard vectorized WFA and SS implementations.

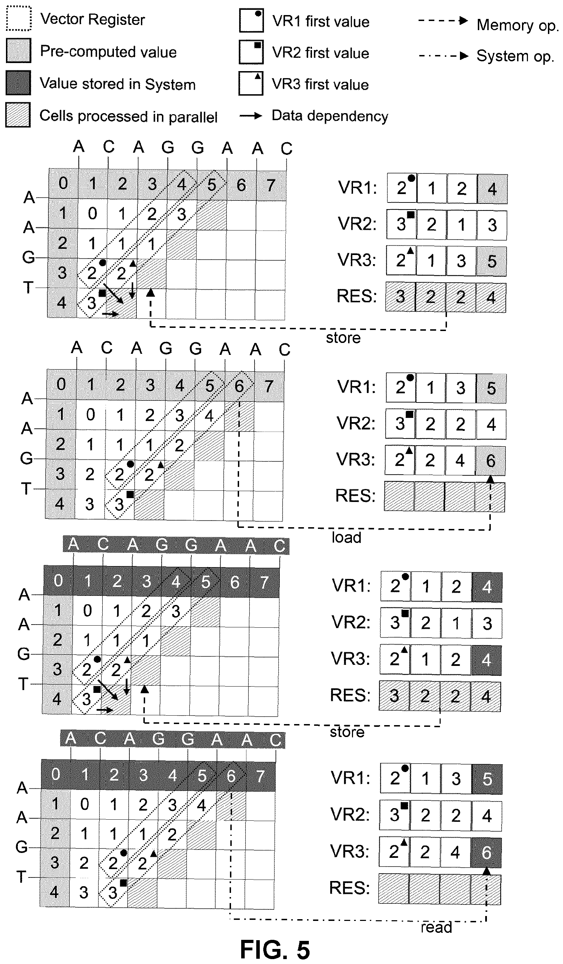

Another interesting example is that of the acceleration of classical DP algorithms by using the system (1) of the invention. Figure 5 depicts the execution flow to process one anti-diagonal in classic DP-based algorithms using commercial vector architectures (upper panels) and the system (1) of the invention's hardware (lower panels).

In the classical DP-based algorithm used in this example, a new anti-diagonal is calculated using the immediate two previous anti-diagonals. The computed diagonal and one vector register from the previous step can be reused to compute the next diagonal; however, new values must be loaded from memory. These new values comprise elements in the diagonal computed in the previous step and a pre-computed value. In the lower panels of Figure 4, the system (1) of the invention is used to reduce the store-load forwarding by placing one of the input sequences and the pre-computed values in the buffers (5). Then, the algorithm reads these values directly from the system (1) without using the cache hierarchy. This reduces significantly the amount of time needed for the algorithms to be successfully executed.

Finally, although the system (1) has been designed to accelerate the memory indexed instructions in modern genome sequence analysis, these instructions represent a major bottleneck in other application domains too, where said system (1) can be directly applied to significantly improve their execution time. For instance, the histogram calculation algorithm can be considered as a representative kernel. This algorithm is a key component of database query planning and is highly utilized in image processing. Histogram calculation is dominated by pointer chasing operations executed using memory indexed instructions. The algorithm directly reads and updates the histogram table in the buffers (5), thus reducing the latency from memory indexed instructions in the code. The corresponding pseudocode for the acceleration of histogram calculation within the scope of the invention is shown for illustrative purposes:
1: vlen = get_vector_length()
2: // Set the histogram size and element size
3: qzconf(histogram.size, 0, size:64-bit)
4: for (i=0; i<input.size; i+=vlen)
5: input v = vload(&input[i])
6: hist_v = qzload(input_v, Buffer0)
7: hist_v = vadd(hist_v, 1)
8: hist_v = reduce_conflicts(hist_v)
9: qzstore(hist_v, input_v Buffer0)

### System evaluation and validation

Two versions of the system (1), one comprising a count ALU module (8) and one without a count ALU module (8) has been evaluated using a gem5 simulator, simulating a 16-core aarch64 full-system with Ubuntu 20.04 and Linux Kernel 4.18.0+. The gem5 model is validated against a Fujitsu A64FX-like architecture, used in the Fugaku supercomputer. Each core includes a system (1) according to the present invention connected to its VPU (2). the gem5's Out-of-Order model is extended to simulate the system's (1) functionality and latency. The ARM SVE ISA is extended with the set of instructions described for the software support. The dependence on the number of read ports of the latency of accessing data stored in the buffers (5) is modelled in detail in gem5 to ensure the accuracy of the performance results. Table 2 summarises the main simulation parameters. It is to be noted that the buffers have been implemented with 8 read ports in this case.

**Table 2. Simulation parameters and setup.**

| |
|---|
| CPU: 2.0 GHz, 16-core A64FX |
| Vector ISA: ARMSVE ISA - Vector Length CPU: 2.0 GHz, 16-core A64FX: 512b |
| Baseline VPU: Instructions latency from the A64FX Manual |
| L1-I: 64KB, 8-way assoc., load-to-use = 2 cycles, Stride prefetcher |
| L1-D: 64KB, 8-way assoc., load-to-use = 4 cycles, Stride prefetcher |
| L2 Cache: 8MB, shared, 16-way assoc., load-to-use = 37, Stride prefetcher |
| DRAM: 4-channel HBM2 |
| QZ_8P Octa-port (8 read ports)-BUFFER: 16KB-read latency = 2 cycles |

Five benchmarks are used to assess the performance and effectiveness of the system (1) of the invention within this simulation framework. They correspond to:
1. Modern read aligners, wherein the efficiency of the system (1) is evaluated over the wavefront algorithm (WFA) and BiWFA acceleration.
2. Edit distance approximation, wherein the SneakySnake (SS) algorithm is accelerated.
3. Classic read aligners, wherein the applicability and performance benefits of the system (1) over two classic read aligners algorithms SW (ksw2) and NW is evaluated.
4. Protein alignment, wherein the efficiency of the system (1) on datasets with a different and larger alphabet than A, C, G and T is evaluated. All the algorithms from the first two benchmarks are uses to process protein sequences.
5. Edit distance approximation plus alignment, wherein the flexibility and efficiency of the system (1) to switch and accelerate multiple stages from the genome sequencing pipeline is analysed. To this end, the SS and WFA algorithms are used and a single implementation combining them is developed. SS filters the input pairs and WFA executes the read alignment on the accepted sequences.

For DNA/RNA inputs (benchmarks 1-3 and 5), the evaluated datasets (two real and two simulated ones) range from 100 bp to 30Kbp. For protein alignment (benchmark 4), the entire BAliBase4 dataset is evaluated, and for each multiple sequence alignment group in the dataset, the pairwise alignment of all possible pairs within the group is run.

Regarding the comparison with the algorithms accelerated by employing state-of-the-art or standard systems, the auto-vectorization support from the compiler is used. For WFA, BiWFA and SS algorithms, an in-house vectorized version is implemented using Advanced RISC Machine (ARM) Scalable Vector Extension (SVE) ISA intrinsics. For ksw2 and parasail, standard, open-source vectorized implementations are used after being adapted to the SVE ISA. On the other hand, all the algorithms are adapted in order to be efficiently accelerated by the system (1) of the invention, as well as validated by bit-wise comparing their outputs with their corresponding standard version. For the system (1) of the invention, the execution time reported includes the time the algorithm takes to store the input sequences into the buffers (5).

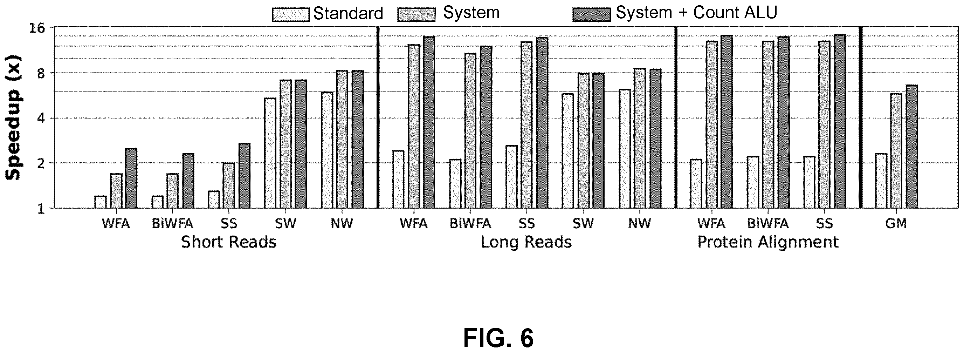

Within this setup, a single-core performance analysis is carried out. Figure 6 depicts the single-core performance results for all the evaluated algorithms. It can be seen, in said Figure, that for benchmarks 1-4, the system (1) of the invention shows better performance than the standard counterpart. This improvement is even more relevant in the case of long reads and protein sequence analysis.

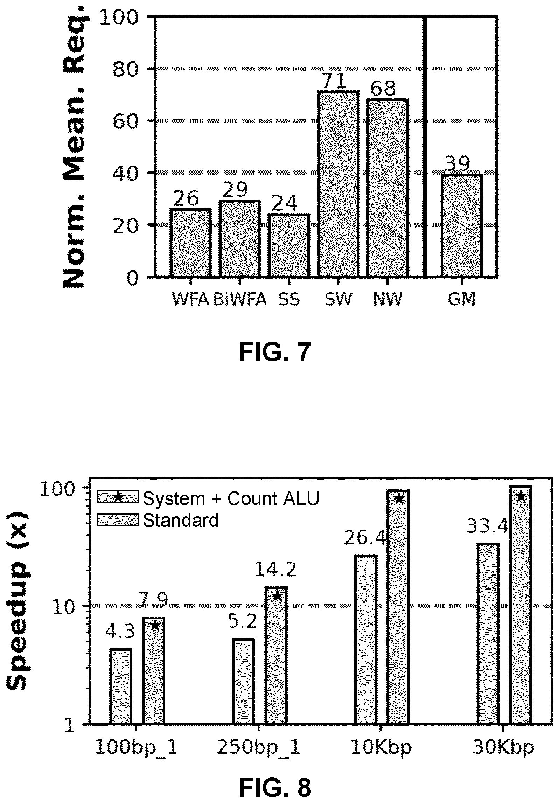

The same analysis is repeated in a multicore scenario, in which the scalability of the system (1) is assessed. The results can be seen in Figure 7, which shows that all implementations of the system demonstrate good performance scalability when increasing the number of threads. This is due to the reduction of memory requests issued to the cache hierarchy from the system (1) compared to standard accelerators (see Figure 8 for this comparison).

Figure 8 shows the comparison between the system (1) of the invention and the standard implementation of benchmark 5. In this case, the capacity of the system (1) to switch between and accelerate two different algorithms (SS+WFA) is analysed. It can be seen that the system (1) outperforms the conventional implementation both for short and long sequences. Thus, these experiments demonstrate the flexibility and integration of the system (1) of the invention in multiple algorithms in the genome sequencing pipeline achieving notable performance benefits.

Finally, a comparison has been carried out between the system (1) of the invention and GPU accelerators as well as between the system (1) of the invention and domain-specific accelerators.

In the first case, for short sequence analysis, GPU accelerators outperform the system (1) by a small factor. However, their area is more than ten times larger than that of the system (1). For long sequence analysis, however, the system (1) outperforms GPU accelerators maintaining its small silicon area.

In the second case, specific domain accelerators outperform the system (1) in some cases. Nevertheless, the system's (1) design offers three unique features. First, it has the capability to accelerate various algorithms and steps within the genome sequencing pipeline, distinguishing itself from certain accelerators that may only support a subset of these steps or algorithms. Second, it is cost effective as it can be integrated within a general-purpose CPU pipeline with a negligible silicon area overhead. In contrast, the design and introduction of new domain-specific accelerators in the market incur high design and verification costs. Third, instead of designing algorithm-specific hardware, it integrates primitive instructions (e.g., indexed memory instructions, and data transformations) and their hardware acceleration support.

As a summary, it has been demonstrated that the present invention provides a novel system (1) for improved acceleration performance of genomics (and other sequence) analysis algorithms that is versatile and that is designed to accelerate memory access operations to input sequences and misaligned data operations, to provide a flexible framework applicable to multiple algorithms, and to achieve a light-weight hardware implementation that reuses the available hardware in VPUs.

## Claims

1. System (1) for accelerating the execution of an algorithm, the system (1) being adapted to connect to the vector datapath of a central processing unit, CPU, wherein the CPU comprises a Vector Processing Unit, VPU (2), comprising, in turn, a Vector Register File, VRF (3) configured to manage a flow of data, and an arithmetic logic unit, ALU (4), configured to perform arithmetic and logic operations on data,
**characterized in that** the system comprises:
- a data encoder (6) connected to the VRF (3);
- one or more direct-mapped buffers (5) connected to the VRF (3) and to the data encoder (6), the one or more buffers (5) comprising at least one write port and a plurality of read ports and being adapted to support bit-encoded, unaligned values; and
- an access control module (7) connected to the one or more buffers (5), to the VRF (3) and to the ALU (4);
wherein:
- the data encoder (6) is adapted to receive data from the VRF (3), apply a static-bit encoding to the received data obtaining encoded data, and send the encoded data to the one or more buffers (5);
- the access control module (7) is adapted to transfer data from the VRF (3) to the one or more buffers (5) and to transfer data and/or instructions from the buffers (5) to the ALU (4); and
- the one or more buffers (5) are adapted to receive data from the VRF (3) and/or from the data encoder (6), store it in a position within the buffer (5) and deliver it to the access control module (7) whenever a read operation is executed by said access control module (7) upon the buffer (5) specifying the corresponding position.

2. System (1) according to the preceding claim, wherein the static-bit encoding applied by the data encoder (6) to the received data is the smallest possible bit-encoding of said received data without loss of information.

3. System (1) according to any of the preceding claims, wherein the access control module (7) is adapted to configure the number of elements stored in each buffer (5) and the bit-size of each element stored in each buffer (5).

4. System (1) according to any of the preceding claims, wherein the access control module (7) is further configured to send one or more instructions to the ALU (4) to perform one or more arithmetic and/or logic operations upon two data values received from the one or more buffers (5) and to send the result of said operation to the VRF (3).

5. System (1) according to any of the preceding claims, wherein the access control module (7) is further configured to send one or more instructions to the ALU (4) to perform one or more arithmetic and/or logic operations upon a data value received from one or more buffers (5) and a data value received from the VRF (3) and to send the result of said operation to the VRF (3).

6. System (1) according to any of the preceding claims, further comprising a count ALU module (8) connected to the VRF (3) and to the access control module (7), the count ALU module (8) being adapted to:
- receive two input sequences of data from the VRF (3) and/or from the one or more buffers (5);
- determine the number of consecutive matching elements between the two input sequences of data; and
- send the number of determined consecutive matching elements to the VRF (3).

7. System (1) according to any of the preceding claims, wherein the number of read ports comprised by the one or more buffers (5) is 2, 4 or 8.

8. System (1) according to any of the preceding claims, wherein the one or more buffers (5) further comprise:
- a plurality of memory banks (9) comprising a word bit-length equal to the bit-width of the VPU lanes comprised by the CPU and adapted to store data within a column structure;
- one or more write logic modules (10) connected to the memory banks (9), to the data encoder (6) and to the VRF (3) adapted to receive input data and an input position and to split the input data into segments and store each segment into consecutive memory bank columns according to the input position; and
- one or more read logic modules (11) connected to the memory banks (9) and to the access control module (7) adapted to fetch data stored in consecutive memory bank columns, to concatenate the fetched data into a single output and to send the output to the access control module.

9. System (1) according to the preceding claim, wherein each read port comprises a number N of memory banks (9) connected to a single read logic module (11), and where N is equal to the following ratio: maximum vector length supported by the CPU/word bit-length of the memory banks.

10. Computer implemented method for accelerating the execution of an algorithm, the method comprising the operation of a system (1) according to any of the preceding claims connected to the vector datapath of a CPU and performing the following steps:
a) receiving input data in the VRF (3);
b) sending the input data to the data encoder (6) and applying a static-bit encoding to said input data, obtaining encoded data;
c) sending the encoded data and a position index to the one or more buffers (5) and storing said encoded data in the one or more buffers (5) according to the position index;
d) executing the algorithm by:
d1) sending input data from the VRF (3) to the ALU (4);
d2) sending encoded data from the one or more buffers (5) to the ALU (4) through the access control module (7);
d3) performing arithmetic and/or logic operations upon the input data and/or the encoded data obtaining a first output;
d4) sending the first output to the VRF (3) and/or to the one or more buffers (5);
d5) repeating steps d1)-d4) until the execution of the algorithm is completed and a final output is obtained; and
d6) sending the final output of the execution of the algorithm to the VRF (3).

11. Use of a method according to the preceding claim for at least one of the following:
- accelerating a data sequence alignment algorithm;
- accelerating a genetic or genomic sequence alignment algorithm; and
- accelerating a histogram computation algorithm.
